# EUROPEAN PATENT SPECIFICATION

(11) **EP 3 744 206 B1**
(45) Date of publication and mention of the grant of the patent: **01.03.2023**
(21) Application number: 20176347.1
(22) Date of filing: 25.05.2020
(51) Int. Cl.: A43B 7/36, A43B 17/00, B32B 5/02, A43B 17/14, B32B 27/18, B32B 5/14, B32B 5/26, B32B 7/12, B32B 7/14, B32B 25/10, B32B 27/08, B32B 27/40

(54) **IMPROVED MULTILAYER FOR INSOLE**
VERBESSERTE MEHRFACHSCHICHT FÜR EINLEGESOHLEN
MULTICOUCHE AMÉLIORÉE POUR SEMELLE

(30) Priority: 24.05.2019 IT 201900007221
(43) Date of publication of application: 02.12.2020
(73) Proprietor: Siretessile S.r.l., 31041 Cornuda (TV) (IT)
(72) Inventor: BAGGIO, Gianfranco, 31041 Cornuda (Treviso) (IT)
(74) Representative: Braidotti, Andrea

(56) References cited:
- WO-A1-01/96109
- CN-A- 103 859 696
- CN-A- 109 137 520
- JP-U- S59 108 404
- US-A- 5 319 867
- US-A1- 2012 204 444

## Description

The present invention relates to an improved antistatic and/or conductive multilayer for insoles, as well as an insole made with said multilayer.

In order to make a shoe more comfortable, the use of an insole (also called "insole") is already known, which is substantially made up of a laminar element that is inserted, generally so that it can be removed if necessary, when inside a shoe, and in particular between the midsole and the foot (generally wrapped in the sock) of the user.

In particular, insoles for use in safety footwear are known on the market. These insoles need appropriate mechanical properties, as they must have sufficient rigidity to be able to easily fit them, and in particular, without folding, into the rigid safety shoe, and at the same time they must have sufficient softness to ensure optimal comfort for the foot of the operator who wears them. Additionally, the insoles must have high abrasion resistance to resist the continuous rubbing to which they are inevitably subjected.

Additionally, the insoles must have excellent thermal insulation characteristics, as they must be designed for use in the most varied conditions, from the cold of the high mountains, to the heat of road construction sites.

Generally, the known insoles are made of non-antistatic and non-conductive material, and the electrical conductivity between the upper face of the insole and the lower one is obtained by means of a seam, made with a wire in conductive material, which repeatedly crosses the insole itself from a face to face.

This solution is rather complicated and laborious to implement, and is also not fully satisfactory since the electrical conduction occurs only in correspondence with the wire and, therefore, the application of the latter must be suitably designed and carried out so as to always be contact with the user's foot, on one side, and the sole of the shoe, on the other side. More in detail, this is particularly complicated to achieve because, especially during some movements, the user's foot may be in contact with areas of the insole where conductive seaming is not present and - therefore - in these situations, undesirably, there would be the risk of not having a current flow which allows to discharge any accumulated electrostatic charge towards the sole of the shoe.

Furthermore, the conductive seam is particularly subject to wear or risk of breakage and this because of its continuous rubbing on one side with the foot or with the sock, and on the other side with the sole of the shoe in which it is housed; in particular, once the conductive seam is damaged, the antistatic and conductive function of the entire insole is lost and the wire, therefore, should be promptly replaced. It is easy to understand how this situation is particularly problematic since generally the user is not accustomed and sensitized to checking the state of the seam of the insole.

Last but not least, the fact that the presence of a seam, and in particular of a seam made with a conductive thread which is generally metallic, is not optimal for the comfort of the user and, in particular, can be annoying, especially if worn for long time.

Insoles are also known in which the electrical conductivity between the upper face of the insole and the lower one is obtained by means of a fabric made with antistatic and/or conductive wires, such as for example silver wires. However, the production costs of these fabrics are extremely high and moreover the manufacturing methods are particularly onerous and laborious. In particular, to obtain these fabrics, it is necessary to set up and define immediately a specific processing method, which is then difficult to adapt for the realization of other fabrics.

JP S59108404 describes a conductive insole consisting of a body which is made of a resin containing a conductive material and in which a fabric layer is entirely incorporated within it. This document discloses a multilayer according to the preamble of claim 1.

US 2012/204444 describes an insole which is constituted by a first layer, facing the user's foot, which is intrinsically conductive and/or antistatic in that it is made with a fabric comprising fibers of conductive material, and by an underlying second soft and intrinsically conductive and/or antistatic layer, for example made with a conductive and/or antistatic polymeric foam.

US5319867 describes an electrically conductive insole, which has a lower layer made of conductive material, and an upper layer, facing the user's foot, made of fabric, which includes fibers made of conductive material.

WO01/96109 describes an electrically conductive insole in which a first layer, facing the user's foot, in fabric (or non-woven fabric) which is made conductive by adding fibers of conductive material and which is associated - for example by melting the two layers or by using an adhesive - to an underlying layer of soft and conductive material.

CN 103859696 describes an antistatic insole, which uses an intrinsically conductive fabric layer facing the user's foot and an underlying polyurethane layer.

However, these solutions are not fully satisfactory since the realization of a fabric comprising fibers of conductive material, in particular in the case in which they are metallic fibers, is complicated, and therefore expensive to manufacture. Furthermore, the mechanical properties (flexibility and softness) of the resulting fabric are generally unsatisfactory, since said fibers are particularly rigid and hard. Furthermore, the continuous friction of the fibers in conductive material with the remaining part of the fabric and/or with the underlying lower layer in soft material can lead to rapid wear of the latter, thus limiting the durability of the insole.

CN109137520 describes a material for antistatic insoles and, in particular, a layer of non-woven fabric, which is made conductive and/or antistatic by immersion in an aqueous solution containing graphene oxide, and subsequently hardened by the application of a resin, based on PoliVinil-Alcohol (PVA). However, this solution is not fully satisfactory as it is complex to implement due to the various treatment steps of the non-woven layer. Furthermore, the resulting layer is unsuitable for being used on its own for the construction of an insole since the non-woven fabric is not suitably soft, and moreover it is not easy to couple with a further cushioning layer of soft material.

The object of the invention is to propose an improved multilayer to be used for the construction of an insole which solves the drawbacks present in traditional solutions.

Another object of the invention is to propose a multilayer and an insole which are antistatic or, preferably, conductive substantially on all their surface extension.

Another object of the invention is to propose a multilayer and an insole, which always and independently of the position of the user's foot with respect to the insole itself guarantee a flow of current towards the midsole of the shoe.

Another object of the invention is to propose a multilayer and an insole with good electrical conductivity properties both in dry and wet conditions.

Another object of the invention is to propose a multilayer and a insole that are at least antistatic, i.e. they have resistance values lower than 1000MΩ according to the European standard EN ISO 20345: 2011 (A) or EN ISO 20347: 2012.

Another object of the invention is to propose a multilayer and an insole, which have rigidity suitable for being easily inserted inside a shoe.

Another object of the invention is to propose a multilayer and an insole, which present optimal comfort for the user.

Another object of the invention is to propose a multilayer and an insole that resist deformations and folds.

Another object of the invention is to propose a multilayer and an insole, which are durable and resistant to abrasion.

Another object of the invention is to propose a multilayer and an insole that allow the user to work safely even in conditions of incomplete support of the foot.

Another object of the invention is to propose a multilayer and a insole whose antistatic or conductive properties are not degraded with intensive and/or prolonged use.

Another object of the invention is to propose a multilayer, a laminar product and an insole, which have an alternative and/or improved characterization, in both construction and functional terms, with respect to traditional solutions.

Another object of the invention is to propose a multilayer, a laminar manufactured article and an insole, which can be obtained simply, quickly and with low costs.

All these purposes, both alone and in any combination thereof, and others, which will result from the following description, are achieved, according to the invention, with a multilayer as defined in claim 1, and an insole as defined in claim 13.

The present invention is further clarified below in a preferred form of practical embodiment thereof, provided purely by way of non-limiting example with reference to the attached drawings, in which:
- Figure 1: shows in a vertical section schematic of the multilayer according to the invention in a first embodiment,
- Figure 2: shows in vertical section schematic of the multilayer according to the invention in a second embodiment,
- Figure 3: shows in vertical section schematic the multilayer according to the invention in a third embodiment,
- Figure 4: shows a schematic vertical section the multilayer according to the invention in a fourth embodiment, and
- Figure 5: shows an insole according to the invention.

Preliminarily, it is specified that hereinafter "antistatic" means that the corresponding electrical resistance is less than about 1000MΩ according to the European standard EN ISO 20345: 2011 (A) or EN ISO 20347:2012. Furthermore, "conductive" means that the corresponding electrical resistance is less than 100Ω according to the European standard CEI EN 61340-5-1: 2016.

As can be seen from the figures, the improved multilayer 1, according to the invention, for an insole 10 is constituted by the assembly of at least two layers superimposed,
- a first layer 2 comprising a fabric treated with a resin 12 which makes it electroconductive, and
- an underlying second layer 4, which is made of antistatic and/or conductive polymeric material.

According to the invention, the first layer 2 of the multilayer 1 is intended to be in contact with the sock that wraps the foot - or directly with the foot itself or another insole - of the person wearing the shoe inside which the insole 10 made with said multilayer is inserted.

The second layer 4 of the multilayer 1 is intended to come into contact with the midsole of the shoe, inside which the insole 10 made with said multilayer is inserted.

In the multilayer 1, the second layer 4 is entirely and completely positioned below the first layer 2.

The first layer 2 is made of non-conductive fabric which is made conductive following the application of an electrically conductive resin 12 (hereinafter identified also as "conductive resin"). According to the invention, the first layer 2 is made with a fabric formed by a weave of only non-conductive, or in any case less conductive, fibers. Suitably, this allows substantially and potentially any fabric to be used, thus avoiding the entwining or insertion of conductive wires inside the fabric itself.

According to the invention, the first layer 2 is free of through seams made of antistatic and/or conductive material. Preferably, moreover, the fabric of the first layer 2 does not include threads of antistatic and/or conductive materials and, in particular, is in no way made with a wire of antistatic and/or conductive materials.

An electrically conductive resin 12 is applied to said first layer 2 of non-conductive fiber fabric at an area of said first layer 2, which penetrates and passes through said first layer 2 to allow passage, only at at least one zone of said first layer 2, of the electric charges through the first layer 2 towards said second layer 4. In particular, the fabric of the first layer 2 is impregnated, in correspondence with at least one zone of said first layer 2, by said resin 12 which, in essence, crosses it from one surface to another only in correspondence with said at least one area.

Conveniently, the conductive resin 12 can be for example an epoxy or styrene-butadiene resin, or acrylic or polyurethane, or vinyl, or a mixture of these. Preferably, the conductive resin 12 is added with suitable substances (particles) suitable for carrying the filler. Said conductive particles can comprise carbon-based particles, preferably in graphene, graphene oxide and/or carbon black, metallic nanoparticles, for example in silver or copper, or minerals, such as conductive oxides. Advantageously, said particles, in particular those based on graphene, graphene oxide and/or carbon black and/or some metals (such as silver), can have bacteriostatic and/or antibacterial characteristics, to thus confer to the resin 12 and therefore to the multilayer, as well as to the insole made with said multilayer, suitable bacteriostatic and/or antibacterial properties.

Advantageously, the conductive resin 12 can be of the type described in the patent IT102016000085827.

Suitably, the conductive resin 12 has substantially no bearing and supporting function inside the first layer 2 or in the multilayer 1 in general. Advantageously, the conductive resin 12 acts only or mainly as an impregnating agent.

Advantageously, the first layer 2 can be treated with said conductive resin 12 in order to be impregnated with the resin itself when it is in the liquid and/or viscose phase.

Advantageously, the resin 12 of the first layer 2 remains separate and distinct from said second layer 4 and, in particular, it does not penetrate substantially inside the second layer 4.

Conveniently, said conductive resin 12 is in a different material than said second layer 4. More in detail, the first layer 2 with the conductive resin 12 is in a different material than said second layer 4.

Advantageously, as will be clear hereinafter, said second layer 4 can comprise a matrix and/or inclusions/fillers which are different with respect to those of said conductive resin 12. Preferably, the matrix of said second layer 4 is different from that of said conductive resin 12, while the inclusions/fillers of said second layer 4 can be different or even equal to those of said conductive resin 12.

Suitably, the conductive resin 12 is applied in a localized manner (i.e. in separate areas, for example by applying by points) on the fabric of the first layer 2 or - in an embodiment not shown - it can be distributed substantially continuously throughout the surface extension of the fabric itself.

Advantageously, the conductive resin 12 is applied to the fabric in a localized manner according to a regular distribution, preferably according to a predefined scheme. Conveniently, the conductive resin 12 is applied to the fabric of the first layer 2 in a localized manner according to a scheme that affects the entire surface development of the first layer itself and such as to ensure that at least a zone of fabric provided with said resin is always in contact with the sock that wraps the foot of the person wearing the shoe, inside which the insole 10 made with said multilayer 1 is inserted. Suitably, moreover, the application of the conductive resin 12 discreetly, with the application areas distributed in a substantially uniform on the first layer 2, allows a saving of the quantity of resin used, but at the same time it guarantees uniform conductivity over the whole surface extension of the multilayer 1 defining the insole 10.

Conveniently, the conductive resin 12 is applied to the first layer 2 in so as to cover discontinuously from about 1% to about 99%, preferably 10-30%, of the extension s surface of the first layer itself.

Suitably, the first layer 2 can be made of cotton, or in other vegetable and/or animal fibers, or it can be made of synthetic fibers. Advantageously, the first layer 2 is made of a fabric which has good abrasion resistance.

Advantageously, the fabric of the first layer 2 has an interweaving such as to define a plurality of through openings (preferably, for example, smaller than about 0.1 mm or larger than about 1 mm) which make the fabric itself breathable, thus improving comfort of the user, and which also advantageously allow the first layer 2 to be crossed by the conductive resin 12. Preferably, the first layer 2 is not made of non-woven fabric. Preferably, the fabric of the first layer 2 is a fabric obtained by weaving and/or by knitting.

Conveniently, the first layer 2 can have a thickness of about 0.05 - 1 mm, preferably 0.1 - 0.2, so as to guarantee sufficient mechanical strength, without excessively increasing the thickness of the multilayer 1.

The polymeric material of the second layer 4 can be intrinsically antistatic and/or electrically conductive, or it can be obtained starting from a polymeric matrix, even non-conductive, which is then charged with electrically conductive particles (bodies), for example based on carbon, preferably in graphene, graphene oxide and/or carbon black, or metallic particles (preferably of silver or copper) or minerals, conductive oxides, or other ways.

The second layer 4 is made of soft material to improve the comfort of the insole 10 obtained with the multilayer 1 and to cushion the support of the foot by the user.

Preferably, the second layer 4 can have a thickness comprised between about 1 - 3 mm in correspondence of the area of the multilayer defining the tip of the insole 10 and about 3-50 mm in correspondence of the area of the multilayer defining the heel of the insole itself.

Preferably, the second layer 4 can be made of thermoformable polymeric material, alternatively it can be made of polymeric foams. Preferably, the second layer 4 can be made of elastomer, natural or artificial.

Preferably, the second layer 4 is in polyurethane or in expanded polyurethane which is made antistatic or conductive by loading it with particles/bodies of electrically conductive material. Advantageously said electroconductive material particles can comprise carbon-based particles, preferably in graphene, graphene oxide and/or carbon black, or metallic nanoparticles, for example in silver or copper, or minerals, such as conductive oxides.

Advantageously, said particles - in particular those based on carbon, preferably in graphene, graphene oxide and/or carbon black, and/or of some metals (such as silver) - can have bacteriostatic and/or antibacterial properties, so as to confer to the second layer 4 and therefore to the multilayer 1, as well as to the insole obtained with said multilayer, suitable bacteriostatic and/or antibacterial properties.

Suitably, the second layer 4, and in particular its matrix, can be made of other polymeric materials, such as, for example, neoprene, ethylene vinyl acetate, polystyrene, polyvinyl chloride, polypropylene or phenolic resin, provided that they are made antistatic or conductive, for example by using same methods that would be used to make a polyurethane layer electrically conductive.

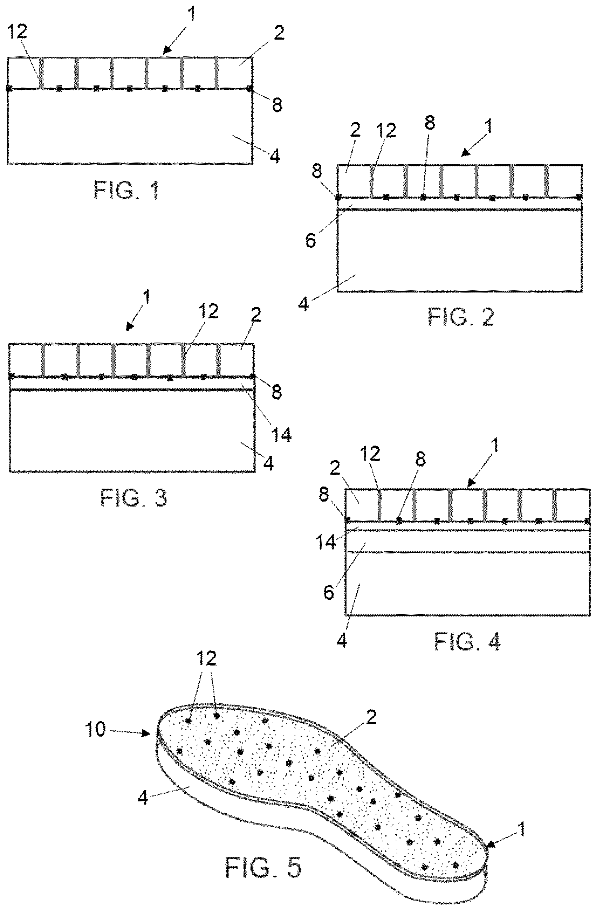

Suitably, as represented in the embodiment of fig. 1, the first layer 2 can be coupled directly and only to the underlying layer 4. In particular, this coupling is carried out by gluing with polymer glue 8 and/or hot-melt resin (preferably with reactive polyurethane adhesive). Suitably, the coupling of the first layer 2 with the second layer 4 can be in points, so as not to create a barrier to the passage of electric charges between the first 2 and the second layer 4.

Conveniently, if the coupling between the two layers 2 and 4 is spot-on, a glue 8 in non-conductive material can be used. In particular, this allows to limit the quantity of glue 8 used and, at the same time, in correspondence with the coupling areas without glue, there is in any case a passage of the electric charges from the first layer 2 towards the second layer 4.

Alternatively, if the coupling between the two layers 2 and 4 is full field, a conductive glue 8 is used (for example comprising a silver lacquer).

As an alternative to the use of glue 8, the coupling between the layers 2 and 4 can be made by flame, adhesive, web, by means of adhesive film, powder, acrylic glue or spray.

Advantageously, in a possible embodiment, the coupling/union between said first layer 2 and said second layer 4 can be carried out by means of the same conductive resin 12. Preferably, after said first layer 2 has been impregnated with said resin 12 it can be coupled with said second layer 4 before the resin itself solidifies, and therefore so that it has time to adhere firmly to said second layer. Suitably, the conductive resin 12 still remains in contact with said second layer 4, but still defines a layer distinct from the latter.

Advantageously, an intermediate layer which is defined by a film 6 which is antistatic and/or electrically conductive (see fig. 2) can be interposed between the first layer 2 and the second layer 4.

Conveniently, the film 6 defines a barrier for the injection of the polymeric material defining the second layer 4, thus isolating the fabric of the first layer 2 from the latter. Preferably, the film 6 is made of impermeable material and, in particular, it is configured to prevent the passage of the liquid/fluid material with which the second layer 4 is made.

Conveniently, the film 6 is in a polymeric material which is compatible with the polymeric material which is applied by injection in order to define/obtain the second layer 4 In particular, therefore, the film 6 is useful in the event that the second layer 4 is defined following the injection, and subsequent hardening, of a corresponding polymeric foam, for example of a polyurethane foam.

Preferably, the film 6 is made of polymeric material which is intrinsically antistatic and/or electroconductive or which is rendered conductive. Advantageously, said film 6 can be made of intrinsically conductive polymers, or it can be made of intrinsically non-conductive polymers, and made conductive by the addition of suitable fillers, for example particles of conductive material. Advantageously, said electrically conductive particles can comprise carbon-based particles, preferably in graphene, graphene oxide and/or carbon black, metallic nanoparticles, for example in silver or copper, or minerals, such as conductive oxides. Advantageously, said particles - in particular those based on carbon, preferably in graphene, graphene oxide and/or carbon black and/or some metals (such as silver) - can have bacteriostatic and/or antibacterial characteristics , so as to confer to said film 6, and therefore to the multilayer, as well as to the insole made with said multilayer, suitable bacteriostatic and/or antibacterial properties.

Preferably, the film 6 is in polyurethane loaded with particles of conductive material, while the second layer 4 is made of polyurethane loaded with particles of conductive material, injected on the lower base of said film, and then hardened.

Suitably, the electrically conductive particles are homogeneously distributed in the film 6, so as to guarantee homogeneous conductivity both at the surface level and through its thickness. In particular, preferably, the electrically conductive particles are homogeneously distributed on the two surfaces of the film 6 so as to obtain suitable antistatic and/or conductive properties over the entire surface development of the film 6, and therefore of the multilayer 1, thus allowing the user to work in safe conditions even if it must have only a part of the foot resting on the ground.

Advantageously, the film 6 has a thickness of about 5-100 µm (micron), preferably of about 20-25 µm (micron).

Suitably, the film 6 must be thick enough to be an efficient barrier during the production process of the insole, as will be clear later, but not too thick, in order not to increase the bulk of the multilayer itself and also reduce the quantities of material used and therefore the costs.

Suitably, the first layer 2 can be coupled to the underlying film 6 by means of polymer glue 8 and/or hot-melt resin (preferably with reactive polyurethane adhesive). Suitably, the coupling of the first layer 2 with the film 6 can be in points, so as not to create a barrier to the passage of electrical charges between the first layer 2 and the film 6.

Conveniently, if the coupling between the first layer 2 and the film 6 is spot-based, a glue 8 in non-conductive material can be used. In particular, this allows to limit the amount of glue 8 used and, at the same time, in correspondence with the gluing-free coupling areas, there is in any case a passage of the electric charges from the first layer 2 towards the film 6 and, from the latter, towards the underlying layer 4. Conveniently, this also allows an economic saving since the non-conductive glue 8 is less expensive.

Conveniently, if the coupling between the first layer 2 and the film 6 is full field, a conductive material glue 8 is used (for example comprising a silver lacquer).

As an alternative to the use of glue 8, the coupling between the first layer 2 and the film 6 can be made by flame, adhesive, web, by means of adhesive film, powder, acrylic glue or spray.

Conveniently, the glue 8 used for the coupling of the first layer 2 to the second layer 4, or to the film 6, must not soften at the injection temperature of the polymeric foam defining the second layer 4.

Advantageously, in an embodiment, between the first layer 2 and second layer 4 (see fig. 3), or between the first layer 2 and the film 6 (see fig. 4), if present, a felt layer 14 can be interposed, suitably made antistatic and/or conductive. Suitably, the presence of the felt layer 14 allows to obtain an effective thermal insulation and furthermore makes the multilayer 1 softer, thus making the corresponding insole 10 obtained with said multilayer more comfortable.

Conveniently, in the absence of the film 6 (see fig. 3), the felt layer 14 can define the barrier for the injection of the polymeric material defining the second layer 4, thus isolating the fabric of the first layer 2 from the latter.

Suitably, the felt layer 14 can be coupled to the first layer 2 and to the second layer 4 or to the possible film 6 with a glue 8 such as the one described above to couple the first layer 2 to the second layer 4 or to the film 6.

Conveniently, the felt layer 14 can be made antistatic and/or conductive by adding and/or dispersing inside it suitable conductive materials, for example electrically conductive particles. Advantageously said electroconductive material particles can comprise carbon-based particles, preferably in graphene, graphene oxide and/or carbon black, and/or metal nanoparticles, for example in silver or copper, or minerals, such as conductive oxides.

Advantageously, said particles - in particular those based on carbon, preferably in graphene, graphene oxide and/or carbon black and/or some metals (such as silver), can have bacteriostatic and/or antibacterial characteristics, so as to confer to the felt layer 14 and therefore to the multilayer, as well as to the insole made with said multilayer, suitable bacteriostatic and/or antibacterial properties.

Advantageously, in the multilayer 1 according to the invention, the conductive resin 12 applied to/in the fabric of the first layer 2 allows the electrical charges that are formed/arrive at the upper surface of said first fabric layer - i.e. the surface that is configured to come into contact with the foot and/or the sock, and/or with another insole which is placed in an intermediate position between the multilayer 1 and the user's foot and/or sock, and on which the rubbing occurs which can give rise to the formation of an electrostatic charge - to pass to the underlying film 6 (if provided) and to still reach/pass through the second layer 4 of the multilayer 1 and finally reach the shoe. Therefore, the electric charges do not accumulate at the layers 2, 4 of the multilayer 1, or at the film 6 and/or at the further felt layer 14, but pass through the multilayer 1 from one face to the other.

Suitably, the production of the multilayer 1 can take place by following these steps:
- the first fabric layer 2 can be coupled to the film 6 (in the embodiments where this is present) on which the glue 8, preferably at points has been appropriately and previously applied,
- the resin 12 is applied by means of a special applicator on the first layer of fabric 2, and suitably penetrates and crosses the latter so as to define passages for the conduction of electrical charges from the first layer of fabric 2 towards the film 6.

Conveniently, the second layer 4 can be obtained and/or associated with the first layer 2 coupled with film 6 in one of the following ways:
- the suitable precursors for obtaining the polymeric material with which the second layer 4 is made are injected inside a mold and at the face of the film 6 opposite to that coupled to the fabric layer 2 , for example molecules suitable for binding by urethane bonds, or a polyurethane already polymerized but still in a liquid and/or viscous state; subsequently, the mold is heated to allow the possible polymerization of the precursors, as well as the expansion and hardening of the polymeric material, and in particular of the polyurethane;
- also, the second layer 4 can be made of polyurethane foams which foam without needing to be heated, or in any case starting from precursors which do not need to be heated to obtain the final material; suitably, the foams are injected inside the mold (which is not heated) in correspondence with the face of the film 6 opposite to that coupled to the cloth layer 2,
- alternatively, the second layer 4 is previously made and formed separately, and is then associated with the laminate formed by layer 2 with the film 6 by coupling with glue 8 by points, full-field, flame, adhesive , on the web, by means of adhesive film, powder, acrylic glue or spray,

Conveniently, the first layer 2 can only be placed on said second layer 4, and subsequently be impregnated with the resin 12 which it is in a liquid and/or viscous state, and which is subsequently hardened.

Conveniently in the event that the second layer 4 is made by injecting the polymeric material in a liquid/fluid state onto the film 6, it is appropriate that this is impermeable to the passage of said polymeric material, so as to prevent the latter from filtering and, example, expanding between the film 6 and the first layer 2.

Advantageously in particular the second layer can be injected/applied at the face of the film 6 which is not associated with said first layer 2.

Advantageously in particular said second layer 4 can be made by injection of said antistatic and/or electrically conductive polymeric material on the face of said film 6 which is not in contact and/or is not associated with said first layer 2.

Conveniently, the multilayer 1 thus obtained can be suitably shaped and/or finished to obtain the shape of a insole 10.

In this way it is possible to make a multilayer 1 which is at least antistatic, preferable conductive, i.e. present passages for the dissipation of the electric charge accumulated/formed by the external surface of the first layer 2 in contact with the sock or the user's foot (or with an overlying insole), towards the possible film 6, and towards the underlying second layer 4 to thus reach the midsole.

Advantageously, the second layer 4 can be made by injection using a mold which substantially corresponds to the shape of the insole 10 to be made.

Advantageously, therefore, the insole 10 can be made according to the following steps:
- make available the fabric that composes said first layer 2,
- treating it, and preferably impregnating it, with said conductive resin 12, preferably when it is in said liquid and/or viscose phase,
- associating it with said layer/film 6, in order to thus obtain a laminar article (i.e. an article having a development much smaller than the other two dimensions).

Suitably, the laminar product thus obtained - and formed by the first layer 2 associated with the intermediate layer defined by said film 6 - can then be made available so that it is possible to inject onto said film 6, preferably inside a mold, a polymeric material, for example an antistatic and/or conductive polymeric foam, which thus defines said second layer 4.

Advantageously, the polymeric material is injected on the face of the film 6 which is not coupled with the first layer 2.

Advantageously, the injected polymeric material will take the shape of said mold in which said laminar article is inserted, so as to form the second layer 4.

Conveniently, in this way, the presence of the film 6 prevents the material that is injected to define the second layer 4 from impregnating the fabric which composes said first layer 2 and/or interpenetrate inside said first layer. Substantially, therefore, the film 6 performs a barrier function with respect to the passage of the material forming said second layer 4.

Conveniently, the present invention also relates to a laminar manufactured article to be used to obtain then a multilayer 1, as described above, for the realization of insoles 10. In particular, said laminar product consists of two overlapping layers in which:
- the upper layer is defined by said first layer 2 in fabric - preferably made by weaving and/or knitting - of fibers of non-conductive material and is free of surface seams in conductive material;
- the lower layer is defined by said film 6 which is made of antistatic and/or electrically conductive polymeric material or is made of felt made conductive by the addition of electrically conductive particles.

Furthermore, in correspondence with at least one area of said first layer 2 of the manufactured article, an electrically conductive resin 12 is applied which penetrates and crosses said first layer 2 to allow the passage, only in correspondence of at least one zone of said first layer 2, of the electric charges through the first layer 2 towards said film 6.

The upper layer and the lower layer are associated with each other, preferably by gluing. The film 6 defining the lower layer of the laminar product is configured to define as a barrier against the penetration of a polymeric foam inside said first layer 2 during an injection process of said polymeric foam, in particular in order to define said second layer 4 to obtain the so-called multilayer 1.

As is clear from what has been described, the multilayer according to the invention, the laminar manufactured article for making said multilayer, as well as the insole made with the multilayer according to the invention, are particularly advantageous in that:
- they have high characteristics in terms of electrical conductivity; in particular, they have an electrical resistance lower than 1000MΩ and in particular allow to maintain an electrical connection between the user's foot and the midsole of the shoe even in conditions of incomplete support of the user's foot on said midsole,
- have appropriate characteristics in terms of softness, making them highly comfortable, in particular thanks to a uniform top layer, since it has no seams,
- keep their characteristics unchanged over time, in particular in terms of resilience and elasticity,
- have high abrasion resistance,
- are highly customizable, and
- have low production costs.

In particular, it should be noted that the anti-static or electroconductivity properties of the multilayer and/or insole according to the invention have been tested in accordance with the European standards EN ISO 20345: 2011 (A) and EN ISO 20347: 2012, as well as provided by the CEI EN 61340-5-1: 2016 standard.

## Claims

1. Multilayer (1) antistatic and/or conductive for insoles (10), wherein, it consists of an assembly of superimposed layers, said assembly comprising:
- a first layer (2) of fabric which is intended to be facing and/or in contact, preferably by means of a sock, with the foot of the user wearing the shoe, inside which is inserted the insole (10) made with said multilayer (1), said first layer (2) is in non-conductive material fiber fabric and has no surface seams in conductive material,
- a second layer (4) in antistatic and/or electrically conductive polymeric material intended to be in contact with the midsole of the shoe, inside which the insole (10) made with said multilayer (1) is inserted,
and **characterized in that**:
- said second layer (4) is entirely and completely positioned below the first layer (2), and
- an electrically conductive resin (12) is applied to said first layer (2) in non-conductive fiber fabric, in correspondence with at least one area of said first layer (2), which is in a different material than said second layer (4) and which penetrates and passes through said first layer (2) to allow the passage, only at at least one area of said first layer (2), of the electric charges through the first layer (2) towards said second layer (4).

2. Multilayer according to claim 1, **characterized in that** said electrically conductive resin (12) comprises particles of electrically conductive materials.

3. Multilayer (1) according to one or more of the preceding claims, **characterized in that** said electrically conductive resin (12) passes through said first layer (2) from side to side and is applied to said first layer (2) in a localized way in a plurality of zones separated from each other, preferably according to a regular distribution, which affects a large part or the whole surface extension of said layer (2).

4. Multilayer according to one or more of the preceding claims, **characterized in that** said resin (12) is distributed in a localized manner on said first layer (2) to cover as well, in a discontinuous manner, an area of about 10 - 30% of said first layer (2).

5. Multilayer according to one or more of the preceding claims, **characterized in that** said first layer (2) is made of fabric which is made by weaving and/or knitted and which has an interweaving such as to define a plurality of through openings, so as to make the breathable fabric and at the same time allows the conductive resin to cross it (12).

6. Multilayer according to one or more of the preceding claims, **characterized by** the fact that said second layer (4) is made of thermoformable polymeric material, preferably polyurethane foam or an elastomer, preferably a natural or artificial rubber.

7. Multilayer (1) according to one or more of the preceding claims, **characterized by** the fact that said second layer (4) is obtained by injection of a polymeric material, preferably polyurethane, which is rendered conductive by loading with electrically conductive particles.

8. Multilayer (1) according to one or more of the preceding claims **characterized in that** said assembly further comprises an intermediate layer which is defined by a film (6) in anti-static and/or electrically polymeric conductive material which is previously coupled to said first layer (2) and which is interposed between said first layer (2) and said second layer (4).

9. Multilayer (1) according to claim 8 **characterized in that** said assembly further comprises a further layer (14) of felt which is made conductive by the addition of electrically conductive particles and that is interposed:
- between said first layer (2) and said second layer (4), or
- between said first layer (2) and said film (6).

10. Multilayer (1) according to the preceding claim, **characterized in that** said film (6) comprises a non-conductive polymer matrix, preferably polyurethane, which is loaded with electrically conductive particles, and that is configured to define a barrier to the injection of the polymeric material defining said second layer (4), thus isolating said first layer (2) from said second layer (4).

11. Multilayer (1) according to claim 8 or 9, **characterized in that** said first layer (2) is coupled to said film (6) and/or said second layer (4) and/or said further felt layer (14 ) by means of a point coupling with a glue (8) of non-conductive material.

12. Multilayer according to claim 8, 9 or 10, **characterized in that** said resin (12) and/or said second layer (4) and/or said further layer (14) and/or said film (6) comprise electrically conductive particles carbon based, preferably in graphene, graphene oxide and/or carbon black.

13. Insole (10) **characterized in that**:
- comprises at least one zone made with a multilayer (1) according to one or more of claims 1 to 12, or
- it is entirely constituted with a multilayer (1) according to one or more of claims 1- 12.

## Patentansprüche

1. Antistatische und/oder leitfähige Mehrfachschicht (1) für Einlegesohlen (10), wobei sie aus einer Anordnung von übereinanderliegenden Schichten besteht, wobei die Anordnung umfasst:
- eine erste Gewebeschicht (2), die dazu bestimmt ist, dem Fuß des den Schuh tragenden Benutzers zugewandt zu sein und/oder mit ihm, vorzugsweise mittels einer Socke, in Kontakt zu stehen, in welchen Schuh die aus der Mehrfachschicht (1) hergestellte Einlegesohle (10) eingefügt ist, wobei die erste Schicht (2) aus einem Fasergewebe aus nichtleitendem Material besteht und keine Oberflächennähte aus leitendem Material aufweist,
- eine zweite Schicht (4) aus antistatischem und/oder elektrisch leitendem Polymermaterial, die dazu bestimmt ist, mit der Zwischensohle des Schuhs in Kontakt zu kommen, in den die Einlegesohle (10) aus der Mehrfachschicht (1) eingefügt ist,
und **dadurch gekennzeichnet, dass**:
- die zweite Schicht (4) vollständig unter der ersten Schicht (2) angeordnet ist und
- ein elektrisch leitendes Harz (12) auf die erste Schicht (2) in einem nicht leitenden Fasergewebe in Übereinstimmung mit mindestens einem Bereich der ersten Schicht (2) aufgebracht wird, das aus einem anderen Material als die zweite Schicht (4) besteht und die erste Schicht (2) durchdringt und durch sie hindurchgeht, um den Durchgang der elektrischen Ladungen durch die erste Schicht (2) zu der zweiten Schicht (4) nur in mindestens einem Bereich der ersten Schicht (2) zu ermöglichen.

2. Mehrfachschicht nach Anspruch 1, **dadurch gekennzeichnet, dass** das elektrisch leitende Harz (12) Partikel aus elektrisch leitenden Materialien umfasst.

3. Mehrfachschicht (1) nach einem oder mehreren der vorstehenden Ansprüche, **dadurch gekennzeichnet, dass** das elektrisch leitende Harz (12) die erste Schicht (2) von einer Seite zur anderen durchdringt und auf die erste Schicht (2) lokalisiert in einer Vielzahl von voneinander getrennten Zonen aufgetragen wird, vorzugsweise gemäß einer regelmäßigen Verteilung, die einen großen Teil oder die gesamte Oberflächenausdehnung der Schicht (2) betrifft.

4. Mehrfachschicht nach einem oder mehreren der vorstehenden Ansprüche, **dadurch gekennzeichnet, dass** das Harz (12) lokalisiert auf der ersten Schicht (2) verteilt ist, um in diskontinuierlicher Weise ebenfalls eine Fläche von etwa 10 - 30 % der ersten Schicht (2) zu bedecken.

5. Mehrfachschicht nach einem oder mehreren der vorstehenden Ansprüche, **dadurch gekennzeichnet, dass** die erste Schicht (2) aus einem Gewebe besteht, das durch Weben hergestellt und/oder gewirkt ist und eine solche Verflechtung aufweist, dass eine Vielzahl von Durchgangsöffnungen definiert wird, um das Gewebe atmungsaktiv zu machen und gleichzeitig zu ermöglichen, dass das leitende Harz es durchquert (12).

6. Mehrfachschicht nach einem oder mehreren der vorstehenden Ansprüche, **dadurch gekennzeichnet, dass** die zweite Schicht (4) aus thermoformbarem Polymermaterial, vorzugsweise Polyurethanschaum oder einem Elastomer, vorzugsweise einem Natur- oder Kunstkautschuk, besteht.

7. Mehrfachschicht (1) nach einem oder mehreren der vorstehenden Ansprüche, **dadurch gekennzeichnet, dass** die zweite Schicht (4) durch Einspritzen eines polymeren Materials, vorzugsweise Polyurethan, erhalten wird, das durch Laden mit elektrisch leitfähigen Partikeln leitfähig gemacht wird.

8. Mehrfachschicht (1) nach einem oder mehreren der vorstehenden Ansprüche, **dadurch gekennzeichnet, dass** die Anordnung ferner eine Zwischenschicht umfasst, die durch eine Folie (6) aus antistatischem und/oder elektrisch leitfähigem polymerem Material definiert ist, die zuvor mit der ersten Schicht (2) gekoppelt wird und zwischen der ersten Schicht (2) und der zweiten Schicht (4) angeordnet ist.

9. Mehrfachschicht (1) nach Anspruch 8, **dadurch gekennzeichnet, dass** die Anordnung ferner eine weitere Schicht (14) aus Filz umfasst, die durch die Zugabe von elektrisch leitenden Partikeln leitfähig gemacht wird und angeordnet ist:
- zwischen der ersten Schicht (2) und der zweiten Schicht (4) oder
- zwischen der ersten Schicht (2) und der Folie (6).

10. Mehrfachschicht (1) nach dem vorstehenden Anspruch, **dadurch gekennzeichnet, dass** die Folie (6) eine nichtleitende Polymermatrix, vorzugsweise Polyurethan, umfasst, die mit elektrisch leitenden Partikeln geladen und so konfiguriert ist, dass sie eine Barriere für das Einspritzen des polymeren Materials bildet, das die zweite Schicht (4) definiert, wodurch die erste Schicht (2) von der zweiten Schicht (4) isoliert wird.

11. Mehrfachschicht (1) nach Anspruch 8 oder 9, **dadurch gekennzeichnet, dass** die erste Schicht (2) mit der Folie (6) und/oder der zweiten Schicht (4) und/oder der weiteren Filzschicht (14) durch eine Punktkopplung mit einem Klebstoff (8) aus nichtleitendem Material gekoppelt ist.

12. Mehrfachschicht nach Anspruch 8, 9 oder 10, **dadurch gekennzeichnet, dass** das Harz (12) und/oder die zweite Schicht (4) und/oder die weitere Schicht (14) und/oder die Folie (6) elektrisch leitfähige Partikel auf Kohlenstoffbasis, vorzugsweise aus Graphen, Graphenoxid und/oder Ruß, enthalten.

13. Einlegesohle (10), **dadurch gekennzeichnet, dass**:
- sie mindestens eine Zone aus einer Mehrfachschicht (1) nach einem oder mehreren der Ansprüche 1 bis 12 umfasst oder
- sie vollständig aus einer Mehrfachschicht (1) nach einem oder mehreren der Ansprüche 1-12 besteht.

## Revendications

1. Multicouche (1) antistatique et/ou conductrice pour semelles intérieures (10), **caractérisé en ce qu'**elle est constitué d'un assemblage de couches superposées, ledit assemblage comprenant :
- une première couche (2) de tissu destinée à être en vis-à-vis et/ou en contact, de préférence au moyen d'une chaussette, avec le pied de l'utilisateur portant la chaussure, à l'intérieur de laquelle est insérée la semelle intérieure (10) réalisée avec ladite multicouche (1), ladite première couche (2) est en tissu fibreux en matériau non conducteur et ne comporte pas de coutures superficielles en matériau conducteur,
- une seconde couche (4) en matériau polymérique antistatique et/ou électriquement conducteur destinée à être en contact avec la semelle intermédiaire de la chaussure, à l'intérieur de laquelle est insérée la semelle intérieure (10) réalisée avec ladite multicouche (1),
et **caractérisé en ce que** :
- ladite seconde couche (4) est entièrement et complètement positionnée en dessous de la première couche (2), et
- une résine électriquement conductrice (12) est appliquée sur ladite première couche (2) en tissu de fibres non conductrices, en correspondance avec au moins une zone de ladite première couche (2), qui est dans un matériau différent de ladite seconde couche (4) et qui pénètre et traverse ladite première couche (2) pour permettre le passage, uniquement au niveau d'au moins une zone de ladite première couche (2), des charges électriques à travers la première couche (2) vers ladite seconde couche (4 ).

2. Multicouche selon la revendication 1, **caractérisé en ce que** ladite résine électriquement conductrice (12) comprend des particules de matériaux électriquement conducteurs.

3. Multicouche (1) selon une ou plusieurs des revendications précédentes, **caractérisé en ce que** ladite résine électriquement conductrice (12) traverse ladite première couche (2) d'un côté à l'autre et est appliquée sur ladite première couche (2) dans un manière localisée dans une pluralité de zones séparées les unes des autres, de préférence selon une répartition régulière, qui affecte une grande partie ou la totalité de l'extension de surface de ladite couche (2).

4. Multicouche selon une ou plusieurs des revendications précédentes, **caractérisé en ce que** ladite résine (12) est répartie de manière localisée sur ladite première couche (2) pour couvrir également, de manière discontinue, une zone d'environ 10 - 30 % de ladite première couche (2).

5. Multicouche selon une ou plusieurs des revendications précédentes, **caractérisé en ce que** ladite première couche (2) est constituée d'un tissu qui est fabriqué par tissage et/ou tricoté et qui a un entrelacement tel qu'il définit une pluralité d'ouvertures traversantes, de manière à rendre le tissu respirant et en même temps permettre à la résine conductrice de le traverser (12).

6. Multicouche selon une ou plusieurs des revendications précédentes, **caractérisée par le fait que** ladite seconde couche (4) est en matériau polymérique thermoformable, de préférence une mousse de polyuréthane ou un élastomère, de préférence un caoutchouc naturel ou artificiel.

7. Multicouche (1) selon une ou plusieurs des revendications précédentes, **caractérisé par le fait que** ladite seconde couche (4) est obtenue par injection d'un matériau polymérique, de préférence du polyuréthane, qui est rendu conducteur par chargement de particules électriquement conductrices.

8. Multicouche (1) selon une ou plusieurs des revendications précédentes, **caractérisé en ce que** ledit assemblage comprend en outre une couche intermédiaire qui est définie par un film (6) en matériau antistatique et/ou électroconducteur polimerique qui est préalablement couplé à ladite première couche (2) et qui est interposée entre ladite première couche (2) et ladite seconde couche (4).

9. Multicouche (1) selon la revendication 8 **caractérisé en ce que** ledit ensemble comprend en outre une couche supplémentaire (14) de feutre qui est rendue conductrice par l'ajout de particules électriquement conductrices et qui est intercalée :
- entre ladite première couche (2) et ladite seconde couche (4), ou
- entre ladite première couche (2) et ledit film (6).

10. Multicouche (1) selon les revendications 8 ou 9, **caractérisé en ce que** ledit film (6) comprend une matrice polymère non conductrice, de préférence du polyuréthane, qui est chargée de particules électriquement conductrices, et qui est configurée pour définir une barrière à la injection du matériau polymérique définissant ladite seconde couche (4), isolant ainsi ladite première couche (2) de ladite seconde couche (4).

11. Multicouche (1) selon les revendications 8 ou 9 ou 10, **caractérisé en ce que** ladite première couche (2) est couplée audit film (6) et/ou à ladite seconde couche (4) et/ou à ladite autre couche de feutre (14 ) au moyen d'un couplage ponctuel avec une colle (8) en matériau non conducteur.

12. Multicouche selon une ou plusieurs des revendications précédentes, **caractérisé en ce que** ladite résine (12) et/ou ladite seconde couche (4) et/ou ladite autre couche (14) et/ou ledit film (6) comprennent des particules à base de carbone, de préférence en graphène, oxyde de graphène et/ou noir de carbone.

13. Semelle intérieure (10) **caractérisée en ce que** :
- comprend au moins une zone constituée d'un multicouche (1) selon une ou plusieurs des revendications 1 à 12, ou
- il est entièrement constitué d'une multicouche (1) selon une ou plusieurs des revendications 1 à 12.
